# Europäisches Patentamt
# European Patent Office
# Office européen des brevets

(11) Numéro de publication: **0 238 528**
**B1**

(12) **FASCICULE DE BREVET EUROPEEN**

(45) Date de publication du fascicule du brevet: **24.10.90**

(51) Int. Cl.⁵: **G 06 F 9/22**

(21) Numéro de dépôt: **86905316.5**

(22) Date de dépôt: **10.09.86**

(86) Numéro de dépôt international:
**PCT/FR86/00302**

(87) Numéro de publication internationale:
**WO 87/01838 26.03.87 Gazette 87/07**

(54) SEQUENCEUR D'INSTRUCTIONS POUR MICROPROCESSEUR A ARCHITECTURE EN RESEAU.

(30) Priorité: **13.09.85 FR 8513634**

(43) Date de publication de la demande:
**30.09.87 Bulletin 87/40**

(45) Mention de la délivrance du brevet:
**24.10.90 Bulletin 90/43**

(84) Etats contractants désignés:
**CH DE FR GB IT LI**

(56) Documents cités:
**EP-A-0 082 328**
**FR-A-2 447 062**

(73) Titulaire: **SGS-THOMSON MICROELECTRONICS S.A.**
**7, Avenue Galliéni**
**F-94250 Gentilly (FR)**

(72) Inventeur: **BOCQUET, Christian**
**Résidence "Les Lierres" Chemin du Coton Rouge**
**F-13100 Aix-en-Provence (FR)**

(74) Mandataire: **Ballot, Paul Denis Jacques**
**Cabinet Ballot-Schmit 7, rue le Sueur**
**F-75116 Paris (FR)**

Courier Press, Leamington Spa, England.

**Description**

La présente invention concerne un séquenceur d'instructions pour microprocesseur, ayant des entrées d'instructions pour recevoir des signaux binaires représentant des instructions et des sorties pour fournir des signaux de commande des fonctions du microprocesseur.

En général, la présente invention concerne les circuits intégrés complexes, et plus particuliérement les microprocesseurs, qui sont des circuits capables d'accomplir non pas une seule fonction bien déterminée mais toute une variété de fonctions différentes. Des instructions, reçues à l'entrée du microprocesseur sous forme de signaux codés, déterminent les fonctions à accomplir. La succession des instructions reçues détermine le déroulement d'un traitement numérique complexe exécuté par le microprocesseur sur des données également reçues à l'entrée du microprocesseur.

Les microprocesseurs sont des circuits dont la complexité est telle que leur conception requiert des années de travail pour les équipes qui sont chargées de cette conception.

Non seulement il est long et difficile de concevoir des schémas de circuits électriques permettant de réaliser toutes les fonctions souhaitées mais en outre il faut faire en sorte que ces schémas puissent être intégrés sur une pastille de silicium de dimensions raisonablement faibles, c'es-à-dire compatibles avec des rendements de fabriction suffisants.

De cette nécessité résulte un travail d'implantation topologique" (layout) très important, permettant de mettre en place les différents éléments de circuit dans une surface aussi faible que possible. Souvent, ce travail d'implantation conduit à remanier les schémas électriques eux-mêmes de sorte que le travail de conception de circuit proprement dit et le travail d'implantation topologique deviennent étroitement liés.

De plus, un microprocesseur comprend des circuits dont les fonctions électriques sont globalement les mêmes pour des microprocesseurs différents: accumulateurs, registres divers, décodeurs d'instructions, unité arithmétique et logique, éventuellement mémoires mortes (ROM) et mémoires vives (RAM) lorsqu'elles sont intégrées sur la même pastille que le microprocesseur proprement dit.

Lorsqu'une équipe de conception a longtemps travaillé sur un microprocesseur, elle veut pouvoir réutiliser dans leur forme définitive, sans retoucher ou en ne les retouchant presque pas, certaines parties du microprocesseur qui seraient buen adaptées à un autre microprocesseur de type nouveau. Cette réutilisation permet une économie notable sur le coût de conception, ceci d'autant plus qu'on réutilisera des parties dont le fonctionnement aura été vérifié sur des microprocesseurs effectivement fabriqués; la réutilisation sans changement notable donne une garantie de bon fonctionnement sans nouveau test pour des blocs importants du nouveau microprocesseur.

Pour permettre plus facilement une telle réutilisation de parties de circuits ayant déjà prouvé leur aptitude à un fonctionnement correct, il est souhaitable de faire en sorte que l'architecture générale du circuit se prête à cette réutilisation; elle doit s'y prêter aussi bien du point de vue de la fonctionalité électrique que du point de vue de l'implantation topologique: si deux fonctions différentes bien distinctes sont topologiquement imbriquées l'une dans l'autre, il sera pratiquement impossible de décider de réutiliser avec profit l'une des fonctions sans l'autre. De même, ce n'est pas parce que des groupes d'éléments de circuit paraissent former topologiquement des blocs bien distincts les uns des autres que ces blocs peuvent être réutilisés avec profil si la séparation des fonctions n'est pas aussi nette que la séparation topologique des blocs.

L'invention s'intéresse plus précisément à la partie du microprocesseur qui a pour dénomination "séquenceur d'instructions" et dont la fonction est la suivante: il reçoit les signaux binaires représentant les instructions à exécuter, signaux qui se présentent sous forme de plusieurs bits en parallèle stockés dans un registre d'instructions; à une instruction déterminée, correspondant à un ensemble de bits bien déterminé, le séquenceur fait correspondre un ou plusieurs signaux de commande apparaissant respectivement sur des lignes de commande en sortie du séquenceur. Ces lignes de commande sont reliées à des portes logiques ou des registres ou d'autres éléments de circuit encore; une instruction actionne un certain nombre de lignes de commande, de manière à ouvrir des portes logiques (par exemple) ou charger des registres etc. ..., tandis qu'une autre instruction ouvrira d'autres portes ou chargera d'autres registres.

Compte tenu de la complexité des fonctions accomplies par le microprocesseur, chaque instruction actionne en généal plusieurs lignes de commande et réciproquement une même ligne de commande peut être actionnée par plusieurs instructions.

Il est résulte que le signal binaire qui apparait sur chaque ligne de commande doit être une fonction booléenne (somme de produits) des bits constituant les instructions.

Le séquenceur comprend dont essentiellement un décodeur composé de portes ET réalisant les produits suivi de portes OU réalisant les sommes. De manière classique on peut d'ailleurs sans inconvénient remplacer ces porte par des portes NOR en cascade avec d'autres portes NOR.

C'est ainsi que pour réaliser le décodage, on utilise en général d'abord un réseau de transistors en lignes et colonnes réalisant des fonctions NOR des bits d'instructions: les bits et leurs compléments arrivent sur les colonnes et chaque ligne établit une fonction NOR d'une association particulière des bits et de leur compléments; la programmation de cette fonction NOR est déterminée par la présence ou l'absence d'un transistor à l'intersection de la ligne avec les différentes colonnes.

2

Un tel exemple de réalisation d'un décodeur dans un séquenceur d'instruction est donné dans la demande de brevet européen EP—A—82 328 de IBM.

Bien entendu, ce premier décodage est insuffisant cal il n'aboutit qu'à associer une sortie de porte NOR à une instruction déterminée. Il faut donc compléter ce décodage pour associer entre elles plusieurs sorties de ce réseau de manière que certaines lignes de commande soient communes à plusieurs instructions différentes tandis que réciproquement certaines instructions actionnent chacune plusieurs lignes de commande.

Les séquenceurs connus utilisent largement ce premier réseau de transistors pour effectuer la première partie du décodage d'instructions; l'utilisation d'un tel réseau est en effet avantageuse du point de vue de l'encombrement et de la facilité de réalisation.

Mais pour ce qui concerne le reste du décodage, les séquenceurs connus utilisent des solutions qui ne sont pas du tout optimales au point de vue de l'encombrement, de la facilité de réalisation, et de la facilité de réutilisation dans d'autres microprocesseurs; une solution utilise un autre réseau complet de transistors mais alors d'une part ce réseau est très encombrant, et d'autre part les sorties du deuxième réseau sont perpendiculaires aux sorties du premier; une autre solution utilise des portes logiques NOR, NAND etc. ... qui accomplissent les fonctions booléennes requises mais qui sont disposées topologiquement de manière totalement aléatoire; cette solution utilise un minimum d'éléments mais consomme beaucoup d'espace pour le passage des connexions électriques vers ces portes et à partir de ces portes. De plus, ellet ne se prête pas à une architecture modulaire où des blocs logiques sont placés côte à côté, un bloc pouvant être remplacé par un autre légèrement différent si en change la conception du microprocesseur.

La présente invention propose une structure de séquenceur qui se distingue des séquenceurs connus par son architecture, son schéma électrique, et son implantation topologique, ces trois composantes combinées permettant d'aboutir à un séquenceur qui d'une part occupe une surface de semiconducteur particulièrement réduite et qui d'autre part est constitué sous forme de blocs juxtaposés facilitant la réutilisation de certaines parties lors de la conception d'un autre microprocesseur de caractéristiques voisines.

Le séquenceur d'instructions pour microprocesseur selon l'invention a la constitution suivante:

a) ses entrées sont reliés à des conducteurs d'entrée s'étendant le long de premières colonnes parallèles,

b) chaque première colonne comprend une pluralité de transistors de décodage qui sont par ailleurs disposés en lignes, un transistor placé à l'intersection d'une ligne et d'une colonne ayant sa grille reliée au conducteur d'entrée et son drain relié à un conducteur de ligne pris parmi un groupe de premiers conducteurs de lignes qui correspondant chacun à une ligne respective,

c) chaque premier conducteur de ligne est relié à la source d'un premier transistor de précharge correspondant à cette ligne, transistor dont la grille est commandée par un premier signal d'horloge, les premiers transistors de précharge étant placés le long d'une deuxième colonne parallèle aux premières colonnes,

d) chaque premier conducteur de ligne est également relié à une première capacité correspondant à cette ligne, les premières capacités étant placées le long d'une troisième colonne parallèle aux premières colonnes,

e) chaque premier conducteur de ligne est relié à la source d'un premier transistor d'échantillonnage correspondant à cette ligne, transistor dont la grille est commandée par un deuxième signal d'horloge et dont le drain est relié à un conducteur de ligne pris parmi un groupe de deuxièmes conducteurs de ligne correspondant chacun à une ligne respective, les premiers transistors d'échantillonnage étant placés le long d'une quatrième colonne parallèle aux autres,

f) le drain de chaque premier transistor d'échantillonnage est également relié à une deuxième capacité respective et les deuxièmes capacités sont placées le long d'une cinquième colonne parallèle aux autres,

g) chaque deuxième conducteur de ligne est relié à ou plusieurs la grille d'un transistors placés le long d'une sixième colonne, les drains de ce ou ces transistors étant reliés chacun à l'entrée d'une porte commandée, et les sources des transistors de la sixième colonne étant toutes reliées à un même point,

h) les portes commandées sont placées le long d'une septième colonne parallèle aux autres et elles ont chacune une sortie reliée d'une part à une troisème capacité respective, d'autre part à la source d'un deuxième transistor de précharge respectif, et enfin à la source d'un deuxième transistor d'échantillonnage, les troisièmes capacités étant placées le long d'une huitième colonne parallèle aux autres, les deuxièmes transistors de précharge étant placés le long d'une neuvième colonne parallèle aux autres et ayant leur grille commandée par un troisième signal d'horloge, et les deuxièmes transistors d'échantillonnage étant placés le long d'une dixième colonne et ayant leur grille commandée par un quatrième signal d'horloge,

i) les drains des deuxièmes transistors d'échantillonnage étant reliés chacun à une entrée d'un ou plusieurs éléments de sortie du séquenceur.

L'invention sera mieux comprise si on se réfère à la description détaillée qui suit et qui est faite en référence aux dessins annexés dans lesquels:

—la figure 1 représente une ligne typique de la structure de séquenceur selon l'invention,

—la figure 2 représente une vue d'ensemble, dessinée sous forme symbolique, de la topologie du séquenceur.

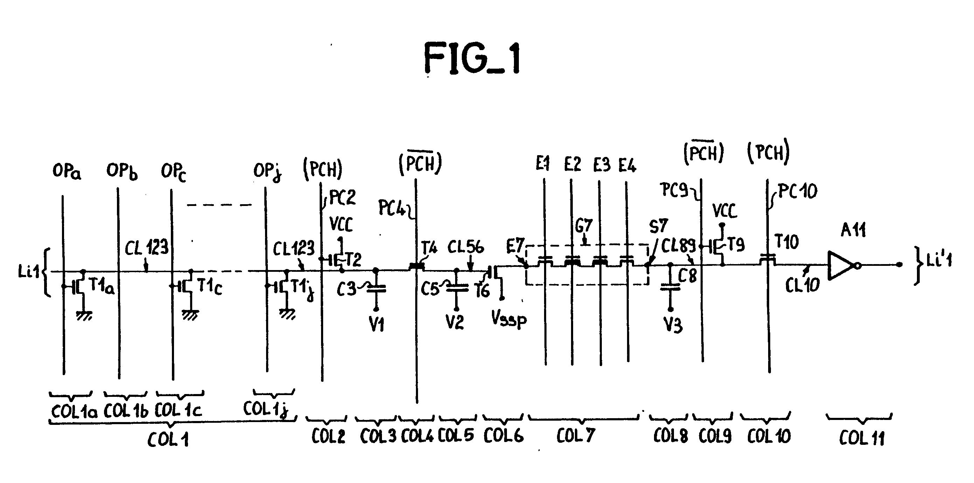

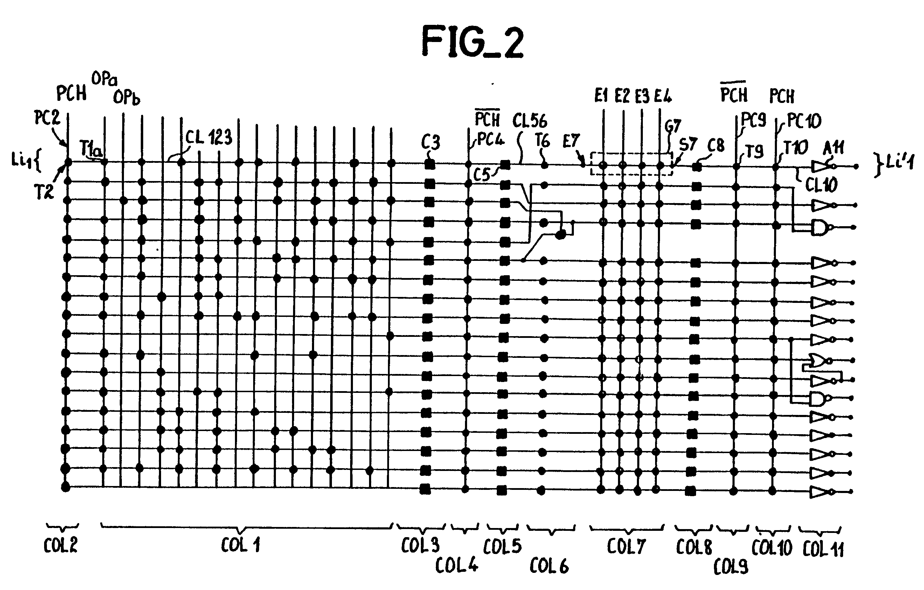

Pour bien montrer la structure du séquenceur selon l'invention sur un schéma relativement lisible malgré la complexité du circuit, on décomposera la description en deux parties: d'abord une description détaillée des différents éléments de circuit que l'on rencontre si on suit essentiellement une ligne de la structure en lignes et colonnes du séquenceur; ces éléments sont représentés sur la figure 1; puis, sur la figure 2, on voit la structure topologique d'ensemble du séquenceur, dans laquelle les transistors du circuit sont représentés sous forme symbolique par des cercles noirs ou blancs et les capacités par des carrés noirs: la présence d'un cercle ou d'un carré à l'intersection d'une ligne et d'une colonne indique qu'il y a un transistor (ou une capacité) à cet endroit de la structure, ce transistor ou cette capacité étant bien entendu connecté comme cela aura été expliqué à propos de la figure 2, en remarquant que les connections des transistors d'une même colonne sont toutes identiques.

Sur la figure 1 on a indiqué par OPa, OPb, OPc ... OPj, les entrées de réception des instructions du microprocesseur: chaque entrée est constituée par un conducteur de colonne respectif. Ces conducteurs de colonne s'étendent parallèlement les uns aux autres; on définit ainsi des colonnes d'entrée ou premières colonnes parallèles, désignés respectivement par COL1a, COL1b, ... COL1j et regroupées dans un groupe de premières colonnes désigné globalement par COL1.

Chaque colonne d'entrée ou première colonne comprend le conducteur d'entrée correspondant et des transistors ayant leur grille reliée à ce conducteur d'entrée, leur source reliée à un potentiel de masse constant, et leur drain relié à un conducteur de ligne perpendiculaire aux conducteurs de colonne. Les transistors qui font partie du groupe de premières colonnes COL1 sont disposées en lignes et colonnes; les transistors faisant partie d'une même ligne ont leur drain relié à un même conducteur de ligne; à l'intersection d'une ligne et d'une colonne il y a soit un seul transistor soit aucun, la présence ou l'absence d'un transistor aux différentes intersections définissant (partiellement) une certaine programmation de fonctionnement du séquenceur.

Sur la figure 1 on a désigné par Li1 la ligne représentée en détail avec tous ses éléments; cette ligne comprend un conducteur de ligne CL123 perpendiculaire aux conducteurs de colonne, et des transistors reliés par leur grille à un conducteur de colonne et par leur drain au conducteur de ligne; ici les éléments représentés sont un transistor T1a sur une première colonne COL1a, des transistors T1c, T1j sur les premières colonnes COL1c, COL1j, mais pas de transistor sur la première colonne COL1b.

Après avoir croisé le groupe de premières colonnes, la ligne Li1 croise ensuite une deuxième colonne COL2 parallèle à la colonne COL1 et comprenant un transistor T2 et un conducteur de colonne PC2. Le transistor T2 a sa grille reliée au conducteur PC2, son drain relié à un potentiel constant Vcc qui est le même pour tous les transistors T2 placés le long de la colonne 2, et ayant enfin sa source reliée au conducteur de ligne CL123.

A chaque ligne correspond un transistor T2 respectif. On verra que le transistor T2 est un transistor de précharge (premier transistor de précharge); il est rendu conducteur par un signal de précharge PCH appliqué sur sa grille par le conducteur PC2.

Le conducteur de ligne CL123 est également relié à une capacité C3 reliée par ailleurs à un potentiel V1.

A chaque ligne correspond une capacité C3 respective; les capacités C3 sont placées en colonne dans une colonne COL3 parallèle aux colonnes COL1 et COL2; le potentiel V1 est commun aux capacités C3 de toute la colonne. Il est en principe égal à Vcc (potentiel d'alimentation haut du circuit).

On notera que les colonnes COL1, COL2, COL3 ne sont pas forcément placées topologiquement dans cet ordre de gauche à droite, on peut très bien imaginer par exemple que la colonne COL2 soit la plus à gauche suivie par la colonne COL1 puis par la colonne COL3. On a d'ailleurs représenté cette possibilité sur la figure 2.

Le conducteur de ligne CL123 est enfin relié à la source d'un transistor T4 qu'on appellera premier transistor d'échantillonnage. A chaque ligne correspond un transistor T4 respectif. Les transistors T4 sont placés le long d'une colonne COL4 parallèle aux autres colonnes, colonne qui comprend par ailleurs un conducteur de colonne PC4 reliant les grilles de tous les transistors de cette colonne COL4. Les premiers transistors d'échantillonnage T4 sont rendus conducteurs par un premier signal d'échantillonnage (en principe $\overline{PCH}$).

La source du transistor T4 est reliée au conducteur de ligne CL123 de la ligne correspondante; le drain du transistor T4 est relié à un deuxième conducteur de ligne CL56 qui croise une cinquième colonne COL5 et une sixième colonne COL6.

La cinquième colonne COL5 comprend une capacité C5 à l'intersection de chaque ligne et de cette colonne; chaque capacité C5 est reliée d'une part au deuxième conducteur de ligne CL56 correspondant à cette ligne et d'autre part à un potentiel V2 qui est le même pour toutes les capacités C5 de la colonne COL5. En principe V2 est égal à Vss (potentiel d'alimentation bas du circuit).

La sixième colonne COL6 comprend un ou plusieurs transistors T6 correspondant à chaque ligne; un seul a été représenté sur la figure 1; sa grille est reliée au deuxième conducteur de ligne CL56; sa source est reliée à un potentiel Vssp qui est le même pour tous les transistors T6 de la colonne COL6; son drain est relié à l'entrée E7 d'une porte commandée G7 ayant d'autres entrées E1, E2, E3, E4 qui sont des conducteurs de colonne.

Vssp peut varier au cours du cycle de fonctionnement du circuit.

On fera attention qu'à partir de l'entrée E7, c'est-à-dire pour les colonnes sept, huit, neuf et dix qu'on va maintenant décrire, l'agencement général est toujours un agencement d'éléments en lignes et colonnes, mais une ligne de la structure de la partie gauche (colonnes COL1 à COL6) ne correspond pas forcément à une ligne de la partie droite (colonnes COL7 à COL10).

La raison en est bien simple: il peut y avoir plusieurs transistors T6 à l'intersection d'une ligne et de la colonne COL6, et de plus l'entrée E7 peut être reliée aux drains de plusieurs transistors T6 appartenant à des lignes différentes. Il y a donc un regroupement de lignes et c'est la raison pour laquelle, à partir de l'entrée E7 et pour les colonnes COL7 à COL10, on parlera toujours d'un agencement en lignes et colonne mais la ligne qui a été représentée sur la figure 1 est appelée ligne Li'l pour la distinguer de la ligne Lil (même si topologiquement elles est dans le prolongement de la ligne Lil, ce qui se produira souvent).

La septième colonne COL7, parallèle aux six premières, comprend des portes commandées G7, chaque porte correspondant à une ligne respective. Ces portes sont commandées par des conducteurs d'entrée en colonne E1 à E4 qui font partie de la septième colonne et qui sont communs à toutes les portes G7 de la colonne COL7. Au contraire l'entrée E7 en ligne est individuelle: à chaque ligne Li'l correspond une entrée E7 respective correspondant à une porte G7 respective.

La porte G7 possède une sortie S7 reliée à un troisième conducteur de ligne CL89 correspondant à la ligne considérée Li'l et perpendiculaire aux conducteurs de colonne.

Une capacité C8 correspondant à la ligne Li'l est reliée d'une part au troisième conducteur de ligne CL89 et d'autre part à un potentiel V3 en principe égal à Vcc. Toutes les capacités C8 sont placées en colonne dans une colonne COL8 et le potentiel V3 est commun à toutes les capacités C8 de la colonne COL8.

Un deuxième transistor de précharge T9 correspondant à la ligne Li'l a sa source reliée au troisième conducteur de ligne correspondant CL89, son drain à un potentiel d'alimentation constant Vcc, et sa grille reliée à un conducteur de colonne PC9 parallèle aux autres conducteurs de colonne. Les transistors T9 correspondant aux différentes lignes sont placés le long d'une colonne COL9 qui comprend ces transistors et le conducteur PC9. Les deuxièmes transistors de précharge sont rendus conducteurs par un signal d'horloge appliqué au conducteur PC9, ce signal étant en principe le complément PCH du premier signal de précharge.

Un deuxième transistor d'échantillonnage T10 a sa source reliée au troisième conducteur de ligne CL89, son drain reliée à un quatrième conducteur de ligne CL10 correspondant à la ligne considérée Li'l, et sa grille reliée à un conducteur de colonne PC10 parallèle aux autres conducteurs de colonne. A chaque ligne Li'l correspond un transistor T10 respectif; ces transistors T10 sont placés le long d'une colonne COL10 qui comprend aussi le conducteur PC10 auquel sont reliées les grilles de ces transistors; ces derniers peuvent être rendus conducteurs sous la commande d'un signal d'horloge qui est en principe le même que le signal de précharge PCH (qui rend conducteurs les transistors T2).

Le quatrième conducteur de ligne CL10 est relié à un élément d'amplification A11 qui peut être par exemple un inverseur (le plus souvent) mais qui peut être aussi une porte NOR ou NAND ayant une entrée reliée au quatrième conducteur de ligne correspondant à la ligne considérée et une autre entrée reliée à un conducteur de ligne correspondant à une autre ligne. Les éléments d'amplification A11 sont placés le long d'une onzième colonne COL11 parallèle aux autres.

Enfin, la sortie de l'élément A11 constitue une sortie du séquencer. Les sorties des éléments A11 correspondant aux autres lignes constituent les autres sorties du séquenceur. Chaque sortie fournit des signaux respectifs qui dépendent:

a) de la présence ou l'absence de transistors T1a à T1j aux intersections d'une ligne considérée et des différentes colonnes COL1a à COL1j du groupe de premières colonnes,

b) des regroupements de lignes effectués au niveau des transistors T6: on rappelle que l'entrée E7 peut être reliée aux drains de plusieurs transistors T6 correspondant à des lignes différentes,

c) des signaux de commande appliqués à la porte G7, et de la constitution de cette porte,

d) des regroupements de ligne à l'entrée des éléments A11 lorsqu'il y a de tels regroupements.

On va maintenant préciser le fonctionnement du circuit ainsi constitué.

Le fonctionnement se déroule par cycles successifs en principe périodiques. Chaque cycle correspond à l'exécution d'une étape d'une instruction (par exemple).

Le cycle se déroule en deux phases principales qui correspondent respectivement à l'activation du signal d'horloge PCH et à l'activation du signal complémentaire PCH.

Pendant la phase PCH, les entrées OPa à OPj sont mises à zéro et bloquent les transistors T1a à T1j; le transistor T2 est rendu conducteur et charge la capacité C3. Le transistor T4 est bloqué.

A la fin de cette phase PCH, pendant le signal PCH, l'instruction à éxécuter est présentée sur les entrées OPa à OPj du séquenceur, le transistor T2 se bloque et la capacité C3 se décharge si au moins l'un des transistors T1a à T1j est conducteur et ne se décharge pas dans le cas contraire. Le transistor d'échantillonnage T4 est par ailleurs rendu conducteur de sorte que la capacité C5 prend la charge de la capacité C3. Ceci rend le transistor T6 conducteur ou le laisse bloqué selon la charge prise par la capacité C3. Si plusieurs transistors T6 sont reliés à la même entrée E7, il suffit qu'un seul transistor T6 soit conducteur pour porter l'entrée au potentiel Vssp. On précisera ici que le potentiel Vssp est égal à Vcc (potentiel d'alimentation haut) pendant cette phase $\overline{PCH}$ alors qu'il est égal à zéro (potentiel de masse) pendant la phase PCH.

La porte G7 sert à autoriser la transmission de l'état logique de l'entrée E7 pendant un cycle donné dans l'exécution d'une instruction. Les entrées E1 à E4 contrôlent cette ouverture. Dans la réalisation concrète représentée, la porte G7 est constituée de plusieurs transistors en série dont certains sont de type déplété de manière à être conducteurs quel que soit le signal appliqué à leur grille (ils sont inactifs dans le fonctionnement de la porte) et d'autres sont de type normal c'est-à-dire sont conducteurs ou bloqués selon le niveau de tension appliqué à leur grille; la porte G7 est alors une porte ET qui s'ouvre lorsque les comandes E1 à E4, reliées aux grilles de ces transistors, sont telles que tous les transistors normaux (non déplétés) soient rendus simultanément conducteurs; les entrées E1 à E4 reçoivent des signaux d'horloge qui définissent des divisions cycliques dans l'exécution d'une instruction et qui sont actifs pendant une grande partie de la phase $\overline{PCH}$ et la totalité de PCH.

Pendant la phase $\overline{PCH}$ il faut préciser que la capacité C8 est préchargée.

Pendant la phase PCH suivante, la précharge de C8 cesse et le transistor T10 est rendu conducteur; à l'instant où la porte G7 conduit, la capacité C8 se décharge ou non dans le transistor T6 selon son état, et l'élément d'amplification A11 transmet à la sortie le niveau chargé ou déchargé de la capacité C8. Si l'élément d'amplification A11 est une porte regroupant plusiers lignes, il transmet à la sortie un état qui dépend de l'état de ces différentes lignes.

La figure 2 montre la topologie d'ensemble du séquenceur. Les cercles noirs pleins symbolisent des transistors; ces transistors sont montés de la manière qui a été expliquée à propos de chaque colonne (le montage n'est pas le même par exemple pour les transistors de la colonne 4 et ceux de la colonne 6). Les carrés noirs symbolisent des capacités.

Pour la colonne 7, on a représenté des transistors sous forme de cercles noirs pleins et d'autres sous forme de cercles vides. Les uns sont des transistors normaux (non déplétés) et les autres sont des transistors déplétés (conducteurs quel que soit le signal appliqué sur leur grille).

Cette figure montre que c'est surtout au niveau de la colonne 6 qu'il peut y avoir un regroupement de lignes qui fait que la ligne Lil ne correspond pas à la ligne Li'l même si de fait elle est dans le prolongement de la ligne Li'l; en d'autres mots le séquenceur a une architecture dont on peut dire en gros qu'elle comporte trois blocs agencés en lignes et colonnes, les colonnes de chaque bloc étant parallèles entre elles et, pour la majeure partie en tous cas, pratiquement dans le prolongement les unes des autres, avec quelques connexions croisées pour des regroupement de lignes, surtout entre la colonne 5 et la colonne 6 et quelques unes entre les colonnes 10 et 11.

Les trois blocs sont respectivement:

a) premier bloc: colonnes 1, 2, 3, 4, 5
b) deuxième bloc: colonnes 6, 7, 8, 9, 10
c) troisième bloc: colonne 11

On peut voir que chacun de ces blocs est divisé en sous blocs (les différentes colonnes) qui ont chacun des sorties qui sont disposées en colonne les unes au-dessous des autres et qui peuvent se raccorder facilement à des entrées, également disposées en colonne, du sous-bloc suivant. Les blocs eux-mêmes peuvent aussi se raccorder les uns aux autres facilement mais en tenant compte bien entendu des regroupements de lignes et croisements de connexions qui sont directement liés au décodage effectué par le séquenceur.

Ce décodage varie d'un microprocesseur à l'autre (les jeux d'instructions à l'entrée et les commandes effectuées par le séquenceur sont différents) mais la structure de séquenceur ainsi décrite se prête particulièrement bien à l'adaptation du séquenceur à un nouveau microprocesseur. De plus cette structure est trés compacte.

**Revendication**

Séquenceur d'instructions pour microprocesseur, ayant des entrées d'instructions pour recevoir des signaux binaires représentant des instructions et des sorties pour fournir des signaux de commande des fonctions du microprocesseur, le séquenceur étant caractérisé par la constitution suivante:

a) les entrées sont reliées à des conducteurs d'entrée (OP1a ... OP1j) s'étendant le long de premières colonnes parallèles (COL1),

b) chaque première colonne comprend une pluralité de premiers transistors de décodage (T1a ... T1j) qui sont par ailleurs également agencés en lignes, un transistor placé à l'intersection d'une colonne et d'une ligne ayant sa grille reliée au conducteur d'entrée correspondant à cette colonne et son drain relié à un conducteur de ligne (CL123) pris parmi un groupe de premiers conducteurs de lignes correspondant chacun à une ligne respective,

c) chaque premier conducteur de lignes (CL123) est relié à la source d'un premier transistor de précharge (T2) correspondant à cette ligne, transistor dont la grille est commandée par un premier signal d'horloge (PCH), les premiers transistors de précharge étant placés le long d'une deuxième colonne (COL2) parallèle aux premiéres colonnes,

d) chaque premier conducteur de ligne (CL123) est également relié à une première capacité (C3) correspondant à cette ligne, les premières capacités étant placées le long d'une troisième colonne (COL3) parallèle aux premières colonnes,

e) chaque premier conducteur de ligne (CL123) est relié à la source d'un premier transistor d'échantillonnage (T4) correspondant à cette ligne, transistor dont le grille est commandée par un deuxième signal d'horloge $\overline{(PCH)}$ et dont le drain est relié à un conducteur de ligne (CL56) pris parmi un groupe de deuxièmes conducteurs de ligne parallèles aux premiers et correspondant chacun à une ligne respective, les premiers transistors d'échantillonnage étant placés le long d'une quatrième colonne (COL4) parallèle aux autres,

f) le drain de chaque premier transistor d'échantillonnage (T4) est également relié à une deuxième capacité respective (C5) et les deuxièmes capacités sont placées le long d'une cinquième colonne (COL5) parallèle aux autres,

g) chaque deuxième conducteur de ligne (CL56) est relié à la grille d'un ou plusieurs (T6) placés le long d'une sixième colonne (COL6), les drains de ce ou ces transistors étant reliés chacun à l'entrée (E7) d'une porte commandée (G7), et les sources des transistors de la sixième colonne étant toutes reliées à un même point (Vssp),

h) les portes commandées (G7) sont placées le long d'une septième colonne (COL7) parallèle aux autres et elles ont chacune une sortie (S7) reliée d'une part à une troisième capacité respective (C8), d'autre part à la source d'un deuxième transistor de précharge respectif (T9), et enfin à la source d'un deuxième transistor d'échantillonnage (T10), les troisièmes capacités étant placées le long d'une huitième colonne parallèle aux autres (COL8), les deuxièmes transistors de précharge étant placés le long d'une neuvième colonne (COL9) parallèle aux autres et ayant leur grille commandée par un troisième signal d'horloge (PCH), et les deuxièmes transistors d'échantillonnage étant tous placés le long d'une dixième colonne (COL10) et ayant leur grille commandée par un quatrième signal d'horloge (PCH),

i) les drains des deuxièmes transistors d'échantillonnage (T10) étant reliés chacun à une entrée d'un ou plusieurs éléments de sortie (A11) du séquenceur.

**Patentanspruch**

Befehlsablaufsteuerung für einen Mikroprozessor, mit Befehlseingängen zum Empfang von Befehle darstellenden Binärsignalen und mit Ausgängen zum Liefern von Steuersignalen der Mikroprozessorfunktionen, gekennzeichnet durch den folgenden Aufbau:

a) die Eingänge sind mit Eingangsleitern (OPa ... OPj) verbunden, die sich entlang von ersten parallelen Spalten (COL1) erstrecken,

b) jede erste Spalte umfaßt eine Mehrzahl von ersten Dekodierungstransistoren (T1a ... T1j), die andererseits ebenfalls in Reihen angeordnet sind, wobei das Gate eines im Schnittpunkt einer Spalte und einer Reihe angeordneten Transistors mit dem dieser Spalte entsprechenden Eingangsleiter und dessen Drain mit einem Reihenleiter (CL123) aus einer Gruppe von ersten Reihenleitern, die jeweils einer betreffenden Reihe entsprechen, verbunden ist,

c) jeder erste Reihenleiter (CL123) ist mit der Source eines dieser Reihe entsprechenden Vorlasttransistors (T2) verbunden, dessen Gate von einem ersten Taktsignal (PCH) gesteuert wird, wobei die ersten Vorlasttransistoren entlang einer zweiten, zu den ersten Spalten parallelen Spalte (COL2) angeordnet sind,

d) jeder erste Reihenleiter (CL123) ist gleichermaßen mit einer dieser Reihe entsprechenden ersten Kapazität (C3) verbunden, wobei die ersten Kapazitäten entlang einer zu den ersten Spalten parallelen dritten Spalte (COL3) angeordnet sind,

e) jeder erste Reihenleiter (CL123) ist mit der Source eines dieser Reihe entsprechenden ersten Abtast transistors (T4) verbunden, dessen Gate durch ein zweites Taktsignal (PCH) gesteuert wird und dessen Drain mit einem Reihenleiter (CL56) aus einer Gruppe von zu den ersten Reihenleitern parallelen und jeweils einer betreffenden Reihe entsprechenden Reihenleitern verbunden ist, wobei die ersten Abtasttransistoren entlang einer zu den anderen Spalten parallelen Spalte (COL4) angeordnet sind,

f) der Drain eines jeden ersten Abtasttransistors (T4) ist ebenfalls mit einer entsprechenden zweiten Kapazität (C5) verbunden, wobei die zweiten Kapazitäten entlang einer zu den anderen Spalten parallelen fünften Spalte (COL5) angeordnet sind,

g) jeder zweite Reihenleiter (CL56) ist mit dem Gate eines oder mehrerer Transistoren (T6) verbunden, die entlang einer sechsten Spalte (COL6) angeordnet sind, wobei die Drains dieses oder dieser Transistoren jeweils mit dem Eingang (E7) eines Steuerports (G7) verbunden sind und wobei die Sources der Transistoren der sechsten Spalte alle mit demselben Punkt ($V_{ssp}$) verbunden sind,

h) die Steuerports (G7) sind entlang einer zu den anderen Spalten parallelen siebten Spalte (COL7) angeordnet und besitzten jeweils einen Ausgang (S7), der einerseits mit einer entsprechenden dritten Kapazität (C8) und andererseits mit der Source eines entsprechenden zweiten Vorlasttransistors (T9) und schließlich mit der Source eines zweiten Abtasttransistors (T10) verbunden ist, wobei die dritten Kapazitäten entlang einer zu den anderen Spalten parallelen achten Spalte (COL8) angeordnet sind, wobei die zweiten Vorlasttransistoren entlang einer zu den anderen Spalten parallelen neunten Spalte (COL9) angeordnet sind und ihr Gate durch ein drittes Taktsignal (PCH) gesteuert wird, und wobei die zweiten Abtasttransistoren entlang einer zehnten Spalte (COL10) angeordnet sind und ihr Gate durch ein viertes Taktsignal (PCH) gesteuert wird,

i) die Drains der zweiten Abtasttransistoren (T10) sind jeweils mit einem Eingang eines oder mehrere Ausgangselemente (A11) der Ablaufsteuerung verbunden.

**Claim**

An instruction sequencer for a microprocesor, having instruction inputs in order to receive binary signals representing instructions and outputs in order to supply command signals for functions of the microprocessor, said sequencer being characterized by the following design:

(a) the inputs are connected with input conductors (OP1a ... OP1j) extending along first parallel columns (COL1),

(b) each first column comprises a plurality of first decoding transistors (T1a ... T1j) which are furthermore also set in lines, one transistor placed at the intersection of a column and a line having its grid connected with the input conductor corresponding to this column and its drain connected with a line conductor (CL123) selected among a group of first line conductors corresponding each to a respective line,

(c) each first line conductor (CL123) is connected with the source of a precharge transistor (2) corresponding to this line, said transistor having its grid driven by a first clock signal (PCH), the first precharging transistors being placed along a second column (COL2) parallel to the first columns,

(d) each first line conductor (CL123) is also connected to a first capacitor (C3) corresponding to this line, the first capacitors being placed along a third column (COL3) parallel to the first columns,

(e) each first line conductor (CL123) is connected with the source of a first sampling transistor (T4) corresponding to this line, said transistor having its grid driven by a second clock signal ($\overline{\text{PCH}}$) and having its drain connected with a line conductor (CL56) selected from a group of second conductors parallel to the first ones and each corresponding to a respective line, the first sampling transistors being placed along a fourth column (COL4) parallel to the other ones,

(f) the drain of each first sampling transistor (T4) is also connected with a second respective capacitor (C5) and the second capacitors being placed along a fifth column (COL5) parallel to the other ones,

(g) each second line conductor (CL56) is connected to the grid of one or a plurality of transistors (T6) placed along a sixth column (COL6), the drains of this transistor or of these transistors being each connected with an input (E7) of a controlled gate (G7), and the sources of the transistors of the sixth column being all connected with a common point ($V_{ssp}$),

h) the controlled gates (G7) are placed along a seventh column (COL7) parallel to the other ones and they each have an output (S7) connected on the one hand with a third respective capacitor (C8) and on the other hand with the source of a second respective precharge transistor (T9) and finally with the source of a sampling transistor (T10), the third capacitors being placed along an eighth column parallel to the others (COL8), the second precharge transistors being placed along a ninth column (COL9) parallel to the other ones and having their grids driven by a third clock signal ($\overline{\text{PCH}}$) and the second sampling transistors being all placed along a tenth column (COL10) and having their grid driven by a fourth clock signal (PCH), and

(i) the drains of the second sampling transistors (T10) being each connected with one input of one or of a plurality of output elements (A11) of the sequencer.

FIG_1

# FIG_2

EP 0 238 528 B1